# EUROPEAN PATENT SPECIFICATION

(11) **EP 0 656 111 B1**
(45) Date of publication and mention of the grant of the patent: **02.02.2000**
(21) Application number: 94918449.3
(22) Date of filing: 20.06.1994
(51) Int. Cl.: G01N 27/12

(54) **USE OF SEMICONDUCTING OXIDE GAS SENSORS**
VERWENDUNG VON HALBLEITERGASSENSOREN
UTILISATION DES DETECTEURS DE GAZ A OXYDES SEMICONDUCTEURS

(30) Priority: 18.06.1993 GB 9312619; 23.10.1993 GB 9321908; 22.12.1993 GB 9326148; 19.02.1994 GB 9403211
(43) Date of publication of application: 07.06.1995
(60) Divisional application: 99201929.9
(73) Proprietor: CAPTEUR SENSORS & ANALYSERS LTD., Didcot OX11 7HR (GB)
(72) Inventor: McGEEHIN, Peter, Compton RG 0QU (GB); MOSELEY, Patrick, Timothy, Chilton Didcot OX11 0RT (GB); WILLIAMS, David, Edward, Abingdon OX14 2EE (GB); HENSHAW, Geoffrey, Stephen, London SW12 9RU (GB); DAWSON, Darryl, Hirst, London E17 6HX (GB); GELLMAN, Laura, Jane, Harrow HA1 4PA (GB)
(74) Representative: Colgan, Stephen James
(86) International application number: GB9401327
(87) International publication number: WO9500836

(56) References cited:
- DE-A- 3 213 286
- GB-A- 2 149 122
- US-A- 4 007 435
- JOURNAL OF MATERIALS CHEMISTRY, vol.1, no.5, 1991 pages 809 - 814 DAVID E. WILLIAMS AND PATRICK T. MOSELEY 'Dopant Effects on the Response of Gas-sensitive Resistors Utilising Semiconductor Oxides' cited in the application

## Description

This invention relates to the use of resistive gas sensors and the use of sensor arrays comprising such sensors.

Such a sensor, as is well known, comprises, in general terms, a semiconducting sensing element such that its electrical resistance changes, in response to a change in the concentration of at least one gas or vapour (sometimes referred to as a "target gas") that is present, to a substantially greater extent than to other gases or vapours.

The sensor is thus selective in favour of the target gas and is accordingly used for detection, and, where required, measurement, of the target gas.

Such a sensor will be referred to as a sensor of the kind specified.

Semiconducting oxide materials, when used for gas sensors, provide devices which are inexpensive, light and robust. However, they suffer a reputation for unacceptable cross-sensitivity to different gases, particularly to water vapour, which is always present in the atmosphere at concentrations which can vary widely. Devices based on tin dioxide, such as are widely used, show strong effects of changes in relative humidity, both on the baseline resistance and on the sensitivity of the resistance change to the presence of gases such as carbon monoxide.

These devices also have a reputation for excessive baseline drift and show a long stabilisation time in the atmosphere after the temperature of the device has first been raised to its operating value. The present invention relates to the use of sensor materials which are more selective than those in current use, particularly in respect of the discrimination of changes in the concentration of the gas to be detected from the effects of varying relative humidity.

A second object of the invention relates to the use of sensor materials with short stabilisation time and greatly reduced baseline drift in comparison with those devices that are currently in common use.

A third object of the present invention relates to the use of sensor materials which offer improved selectivity and sensitivity for certain gases whose detection in the environment is of concern, for example in breathing atmospheres or in the exhaust gases of combustion, and sensor materials useful for the measurement of reactive gases such as hydrogen sulphide in anaerobic atmospheres.

A fourth object relates to the use of certain combinations of sensors utilising different materials which can then be used, in various ways well known in the art, to provide more reliable alarm indications for certain conditions that might be injurious to health and safety.

It has been suggested (in the paper by D. E. Williams and P. T. Moseley, J Materials Chemistry, 1 (1991) 809-814) that the behaviour of semiconducting oxide materials can be manipulated by manipulation of the crystallite size and surface area per unit mass of the material exposed to the gas, and of the concentration of electrically active donor species present in the lattice, so as to give changes characteristic either of n-type materials (resistance decreases in reducing gases and increases in oxidising gases); or of p-type materials (resistance increases in reducing gases and decreases in oxidising gases); or of mixed behaviour.

The same paper also suggested that, by a fortuitous combination of the concentration of electrically active donors and the surface area per unit mass, some selectivity to certain gases might be obtained.

In the light of these disclosures, it is possible to try substituting elements of different valency into some parent composition, and to try making variations in the preparation of materials so as to obtain different surface areas per unit mass, in an attempt to achieve a degree of selectivity. However, the above paper offers no prescription for the choice of suitable patent compositions, and implies that wide selectivity might require specific interaction of the target gas with the surface, as well as tuning of the composition and surface area. The paper therefore leads to a conclusion that the observation of a wide selectivity of response in a semiconducting oxide material would be rather surprising; and that, furthermore, it would be very surprising indeed to find a high degree of selectivity of response where no specific interaction with the surface were anticipated - for example, a high selectivity of response for hydrocarbons over carbon monoxide.

The above mentioned paper is silent on the question of discrimination of the effects of the desired target gas from the effects of variation in relative humidity. It will also be appreciated, especially from the study of the art of catalysis, that substitutions of different elements into a lattice can serve to vary the surface density and nature of the gas adsorption sites present on the surface of the material. Such sites are often classified as acidic or basic, according to whether they can interact with gases such as ammonia on the one hand or hydrogen sulphide or carbon dioxide on the other. For example, it is often said that the substitution of chromium into a lattice serves to increase the acidity of the surface sites. However, it is by no means clear how such adsorption sites couple into the charge carriers present in the solid, so that a change in the adsorption of dissociation of a gas molecule on such a site could give rise to a change in the measured conductivity of the solid material.

The present invention is specified in the claims hereinafter.

The present invention is based upon the use of Cr₍₂₋ₓ₎TiₓO₃, in which 0.3≥x≥0.1. This range of materials is useful for the measurement of volatile alcohols, aldehydes, including dialdehydes such as glutaraldehyde, ketones, such as butan-2-one, hydrocarbons other than methane, including gasolene, ethers, including diethers such as dimethoxyethane, and sulphur dioxide. It is useful for the measurement of hydrogen sulphide in anaerobic altmospheres, as in the measurement of concentrations of hydrogen sulphide in carbon dioxide. It shows particularly good baseline stability and discrimination against the effects of varying relative humidity.

Preferred features of the invention will now be described, by way of example, with reference to the accompanying drawings in which:
Figure 1 is a diagram showing variation with time of the resistance of a sensor device composed of Cr_{1.8}Ti_{0.2}O₍₃₊ₓ₎ before being pretreated, when exposed to various small concentrations of H₂S in air;
Figure 2 is similar to Figure 1 for the same device after pretreatment;
Figure 3 consists of a resistance-gas concentration diagram for a similar pretreated device in H₂S, and, below it, a similar diagram for the ratio (R_{gas}-Rₐᵢᵣ)/Rₐᵢᵣ;

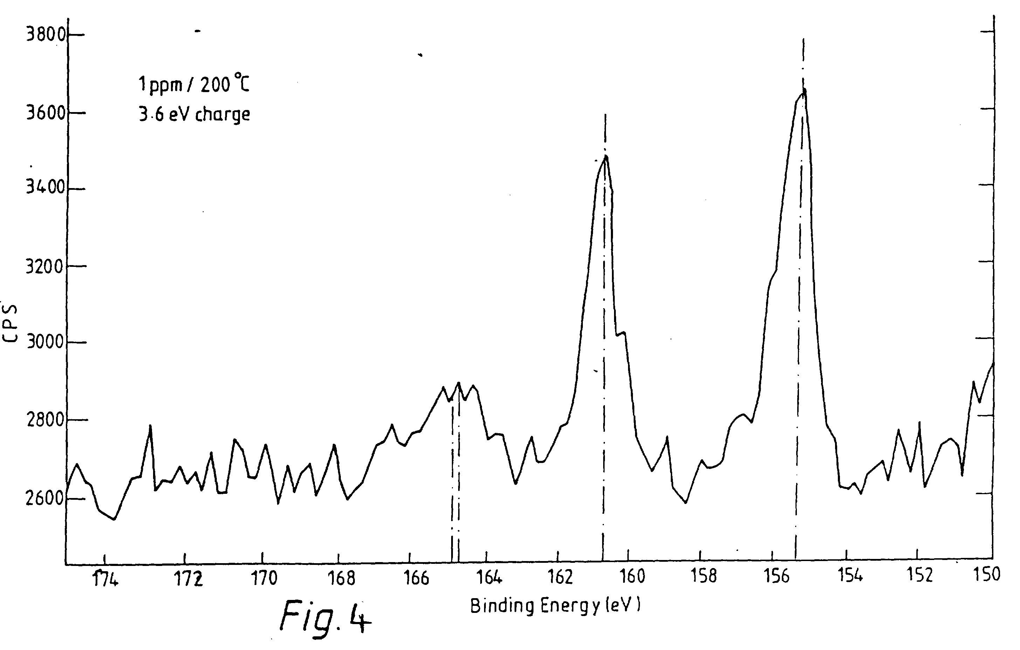

Figure 4 show; an X-ray photoelectron spectrum for a chromium-titanium oxide specimen, partially pretreated;
Figure 5 is similar to Figure 4 for the same specimen when fully pretreated;
Figures 6 and 7 show the response to CO of a chromiumtitanium oxide sensor, in terms of resistance plotted against a function of CO concentration for various values of humidity, at two different temperatures;
Figure 8 is a resistance/time diagram for a chromium-niobium oxide sensor, showing its response to various concentrations of CO in air;
Figure 9 is a response diagram showing variation in the resistance of a barium-tin-antimony oxide sensor with time, in response to various concentrations of CO in air;
Figures 10 and 11 show, respectively, cross-sections through a gas sensor according to the invention.

### Chromium titanium oxide sensors for Hydrogen Sulphide, for use in both aerobic and anaerobic environments

The document GB-A-2 202 940 discloses compositions of general formula Cr₂Ti₍₂₋ₓ₎O₍₇₋₂ₓ₎, where 2>x>0, claiming these as selective ammonia sensors. The document states that sensors in accordance with that invention may be such that they do not suffer significant interference from other reducing gases commonly encountered (e.g. H₂, CO, CH₄, C₂H₄). The examples given are TiO₂ - 48.7 mol% Cr₂O₃(Ti_{0.51}Cr_{0.97}O₍₂₋ₓ₎ and TiO₂ - 90 mol% Cr₂O₃(Cr_{1.8}Ti_{0.1}O₍₃₊ₓ₎. "Techniques and Mechanisms in Gas Sensing", ed. P. T. Moseley, J. O. W. Norrois and D. E. Williams, p.136, and Moseley and Williams, Sensors and Actuators B 1 (1990) 113.5, disclose Ti_{0.9}Cr_{0.1}O₍₂₋ₓ₎ as an unselective material, and Cr_{1.8}Ti_{0.2}O₃ as a material selective to ammonia.

Surprisingly, we have now found that chromium titanium oxides can be formed into sensor elements which are extremely sensitive to hydrogen sulphide.

We have also found, again to our surprise, that the response of Cr_{1.8}Ti_{0.2}O₃₊ₓ to H₂S is greatly enhanced, in both amplitude and speed of response, by prior treatment of the sensor in an atmosphere containing H₂S: an example of such a pretreatment is exposure for a time of a few minutes (between 1 and 10 minutes) to a concentration of 10 ppm of the gas, at a sensor temperature of greater than about 200°C and less than about 600°C. Longer times of exposure, and higher gas concentrations, may be used, but do not give any further enhancement of performance. Sensors prepared in this way have the particular advantage that the interference caused by changes in relative humidity is very small in comparison with the response to hydrogen sulphide: the effect of a change in relative humidity from 0 to 100% at room temperature is equivalent to the response to 10.3 ppm of H₂S when the sensor, is operated at 400°C. When the pretreated sensor is operated at 250°C, relative sensitivity to H₂S is even higher.

This pretreatment (or preconditioning) leads to a modification of the surface of the material, which can be detected either by photoelectron spectroscopy, or other rich surface analytical method, or, conveniently, by temperature programmed desorption. In the latter method, the device is heated in a vacuum and the gases desorbed are detected, for example using a mass spectrometer.

The effect of the pretreatment appears to be permanent at the operating temperature for H₂S detection, and is characterised by an increase of the baseline from that of the virgin material, and a dramatic increase in the sensitivity and speed of response. Temperature-programmed vacuum-desorption studies of the treated materials showed a loss of SO₂ from the surface, at temperatures above 630°C.

The H₂S pretreatment of Cr_{1.8}Ti_{0.2}O₃ has been studied by x-ray photo-electron spectroscopy (XPS). As the pretreatment progressed, the S 2p region of the spectra changed. Initially, three peaks were observed: two major peaks at binding energies of 159.0 eV and 164.4eV, tentatively assigned to sulphide and elemental sulphur species, respectively, and a minor peak at 168.5 eV, attributed to sulphate groups formed on the surface. When the pretreatment was complete, as judged by the effects on the gas response, only a single peak at 168.7 eV was present.

The sensor material was prepared by reacting mixed powders of Cr₂O₃ and TiO₂ at 800°C. A sensor was prepared by depositing, by standard thick-film ceramic fabrication methods, a porous layer of the sensor material over an inter-digitated pattern of gold electrodes supported on an alumina substrate. On the reverse side of the substrate was printed a platinum track. The device was heated by applying a current to the platinum track using a Wheatstone bridge arrangement to keep the platinum track at constant resistance and hence constant temperature.

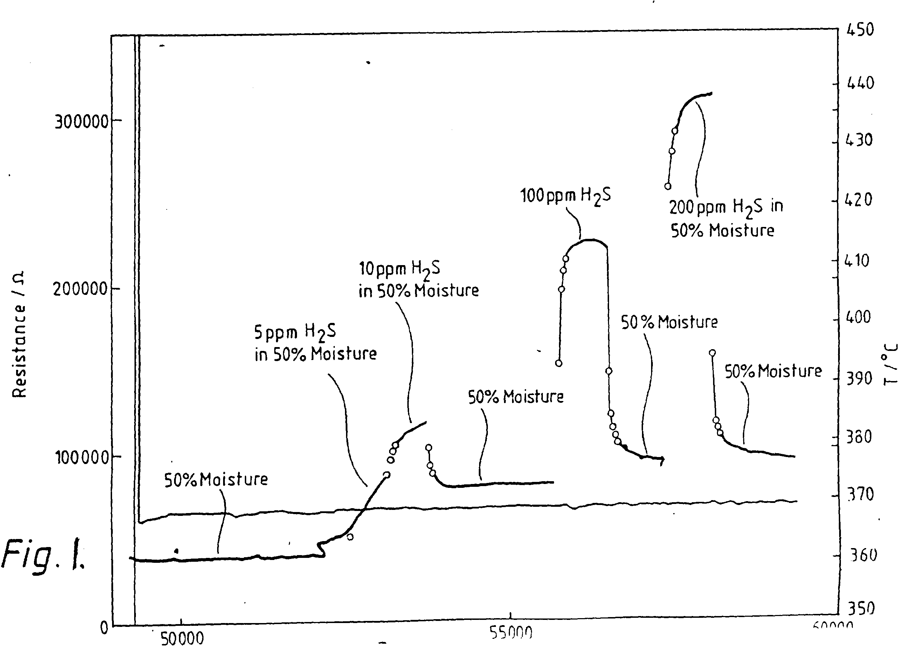

Figure 1 shows the resistance-time variation of a sensor device of composition Cr_{1.8}Ti_{0.2}O₃, upon initial exposure to small concentrations of H₂S in air, at an operating temperature of 370°C. The baseline shift caused by the first exposure is clear.

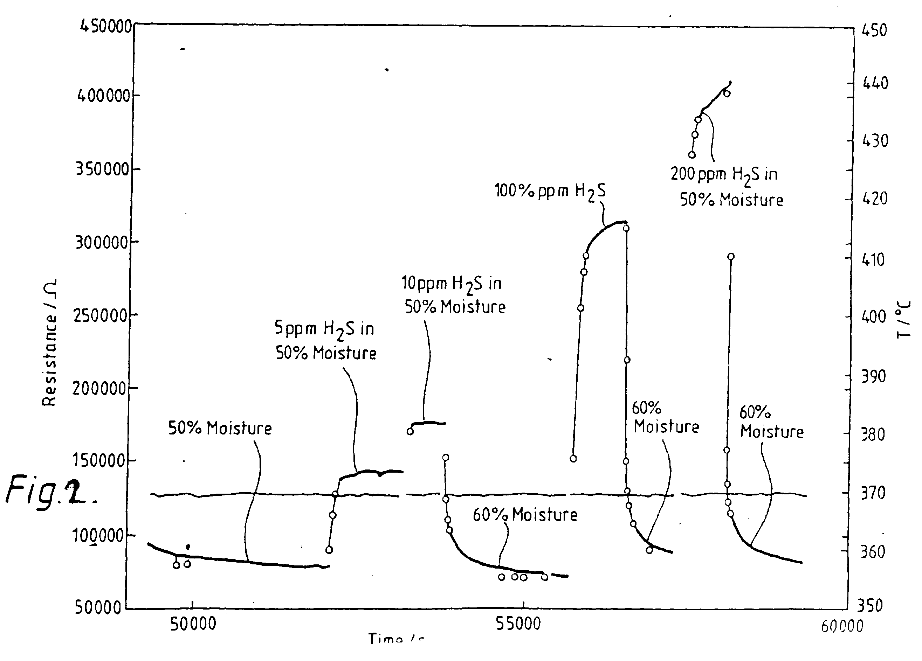

Figure 2 shows subsequent gas exposures. In contrast to the first exposure, the response to 5ppm gas is now rapid and substantial. In both Figures 1 and 2, the left hand scale and the line without symbols show the temperature (370°C). "50% moist" means a relative humidity of 50% in clean air.

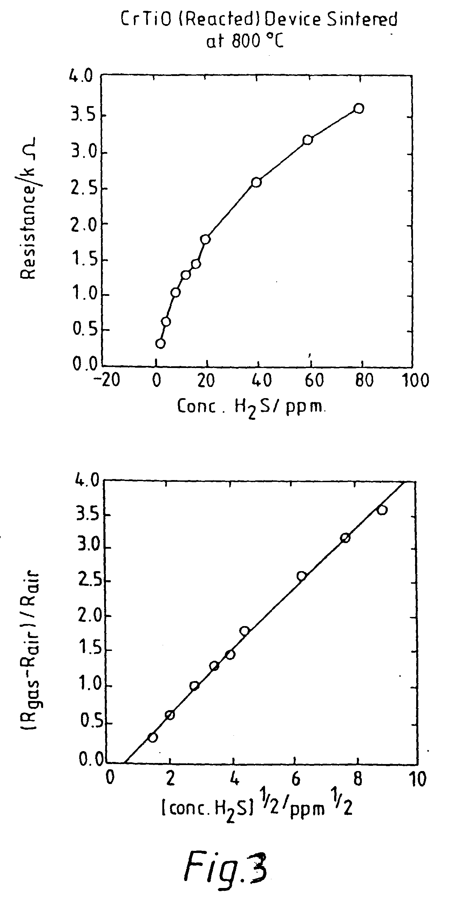

Figure 3 shows the gas response law for a pretreated similar sensor, at 370°C, illustrating the dependence on the square root of the concentration. In the lower diagram of Figure 3, the ratio of (R_{gas}-Rₐᵢᵣ) to Rₐᵢᵣ shows a straight line relationship when plotted against the square root of gas concentration, where R_{gas} and Rₐᵢᵣ are the resistance in the gas and in air. respectively.

The response, at temperatures appropriate to the detection of hydrogen sulphide (≤400°C), of the pretreated sensor to methane, hydrogen, hydrocarbons and carbon monoxide, present in the air, was very small, so that these sensors are very useful for the detection of hydrogen sulphide in a background of such gases. Circumstances where such selectivity is of importance include monitoring for hydrogen sulphide around a natural gas installation.

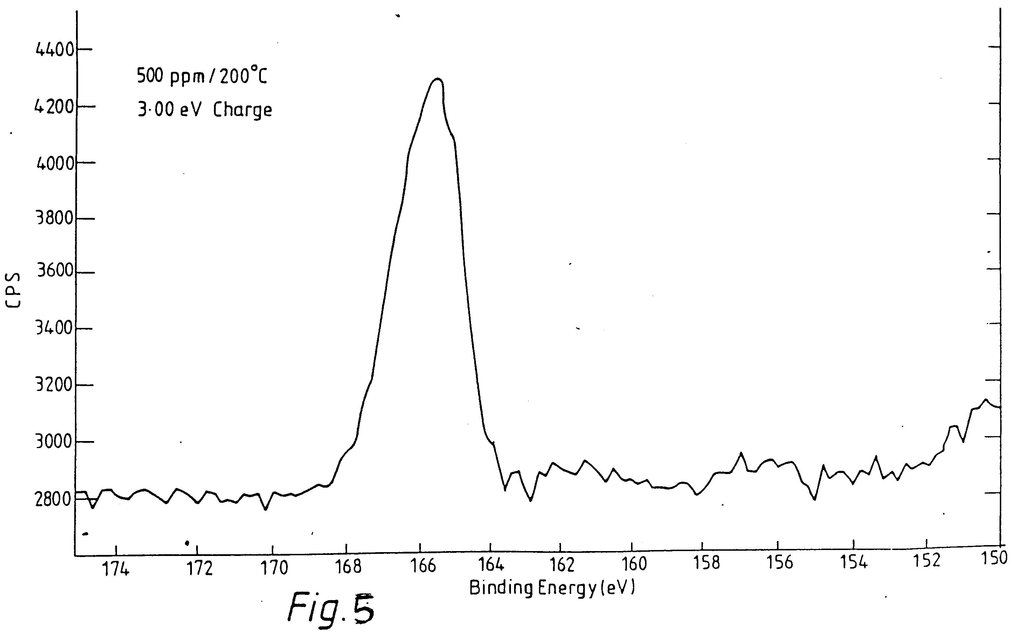

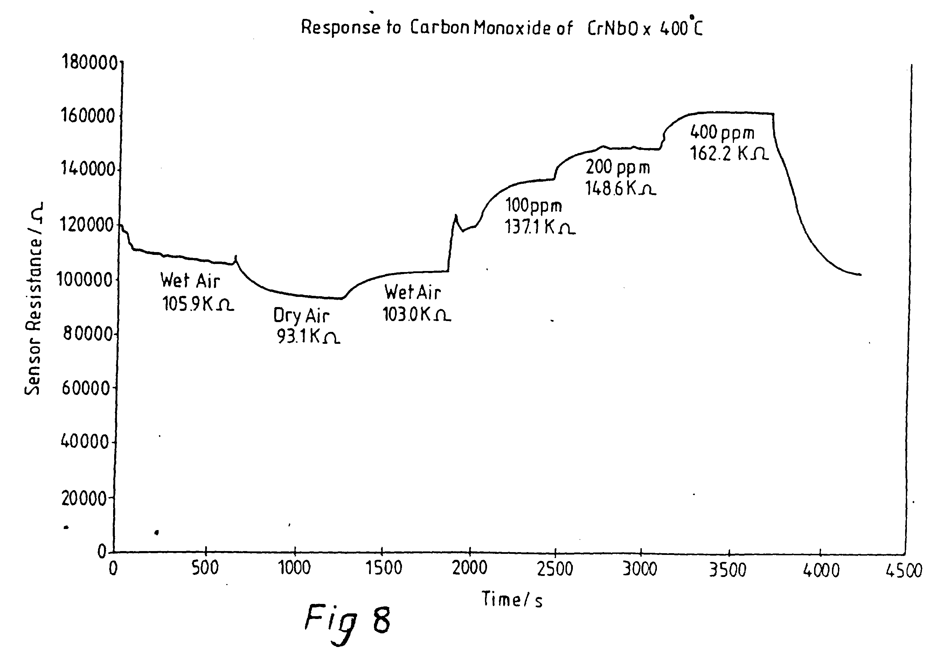

Pretreatment can be detected by x-ray photoelectron spectroscopy (XPS) of the sensor surface. Figure 8 shows an XPS spectrum of a partially treated specimen (exposure to 1ppm H₂S at 200°C). It should be noted that, because of an instrument effect, the binding energy scale on this diagram has to be increased by 3.6eV. Figure 5 shows an XPS spectrum of a completely treated specimen (50ppm exposure at 200°C). The binding energy scale on this diagram is too low by 3eV.

The literature on the behaviour of semiconducting oxides as sensors for reactive gases universally and unambiguously slates that such detection requires the presence of oxygen, preferably at levels such as are found in the air. We have flow found that chromium titanium oxides can be used to measure low concentrations of hydrogen sulphide in an anaerobic or substantially anaerobic environment, such as pure carbon dioxide. In this case, also, pretreatment with hydrogen sulphide enhanced the response, Such sensors are useful in the control of processes such as anaerobic fermentations.

The response of a sensor, pretreated as above, to hydrogen sulphide in carbon dioxide is as follows:

| | |
|---|---|
| Composition: | Cr_{1.8}Th_{0.2}O₃ |
| Operating temperature: | 400°C |
| Resistance in pure CO₂: | 80kohm |
| Resistance in pure CO₂ containing 500ppm H₂S: | 770kohm |

### Chromium titanium oxide sensors for hydrocarbons and carbon monoxide, with improved baseline stability and rejection of effects of varying relative humidity

Tin dioxide and compositions derived from and largely comprising tin dioxide are widely cited in the art and are used in gas sensitive resistors. However, devices fabricated from tin dioxide show a very large baseline drift upon being heated to the operating temperature: a change of more than 100% over a period of 12 hours is not uncommon. Furthermore, this drift can continue for a period of weeks or even months, necessitating constant checking and recalibration. The baseline resistance of tin dioxide devices is also very sensitive to changes in relative humidity: typically, the resistance will halve If the atmosphere is changed from one which in dry (<2%RH) to one which wet (>70%RH). The sensitivity to carbon monoxide is also greatly affected by changes in the ambient relative humidity.

Although the previous literature implies that compositions of chromium titanium oxide which are chromium-rich should be insensitive to hydrocarbons and carbon monoxide, we have now been surprised to find that sensors prepared from these materials, as described herein, can be operated at a temperature such that the response, at concentrations of importance for health and safety monitoring, to propane (operating temperature 475°C), and to carbon monoxide (operating temperature 320°C - 390°C) is substantially greater than the interference caused by a change of relative humidity between 0 and 100% at room temperature.

In contrast to the behaviour exhibited by tin dioxide, sensors fabricated from these materials reach a stable resistance within five minutes of being energised, and show a subsequent baseline drift of less than 0.5% per month. These materials therefore form sensors of great utility for carbon monoxide and hydrocarbons other than methane. The responses to methane and hydrogen are very small, so the sensors are very useful for the detection of carbon monoxide in the presence of a background of methane and/or hydrogren. Circumstances where such a selectivity is of importance include monitoring for carbon monoxide in a coal mine, or in the monitoring for leakage for carbon monoxide from domestic gas-fired appliances.

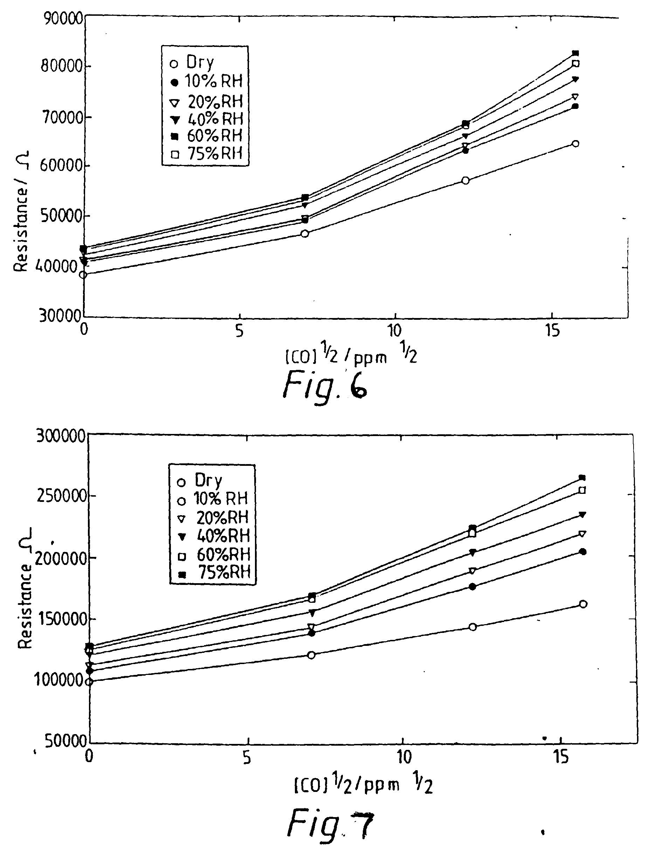

Figures 6 and 7 show the response of a Cr_{1.8}Ti_{0.2}O₃ sensor to various concentrations or carbon monoxide in the air, at various temperatures and relative humidities (referred to an ambient atmosphere at 20°C), and at 415°C in Figure 6 and at 370°C in Figure 7. The response is larger at lower temperature, but if the temperature is too low, then an effect of variation of relative humidity on the sensitivity to CO becomes apparent. The chosen operating temperature of 390°C represents a satisfactory compromise in which the response in adequately large and the effect of relative humidity changes rather small.

In general, the material shows a resistance increase in response to the presence of reducing gases in the atmosphere, and the ratio of resistance in the presence of the gas to resistance in the absence of the gas increases with the square root of the gas concentration.

Exposure to hydrogen sulphide at temperatures between 150°C and 400°C has the effect of considerably diminishing the response to carbon monoxide, and to other games for which the operating temperature in below approximately 450°C.

Table 1 shows that a range of compositions in the series Cr₍₂₋ₓ₎TiₓO₃ is sensitive to carbon monoxide, and has the characteristic that the effect of a change in relative humidity from zero to 100% gives a signal equivalent to only a small concentration of carbon monoxide (the number is given as the 'figure of merit' in Table 1).

**Table 1**

| **Response to 300ppm carbon monoxide in the air (50% relative humidity at 20°C) of sensors fabricated from a range of compositions in the series Cr**_{**(2-x)**}**Ti**_{**x**}**O**_{**3**} | | |
|---|---|---|
| x | (Resistance in presence of CO)/(Resistance in the absence of CO) | Figure of merit (ppm CO equivalent of change in relative humidity from zero to 100%) |
| 0.05 | 2.6 | 0.67 |
| 0.10 | 4.3 | 0.66 |
| 0.15 | 4.3 | 0.5 |

### Chromium titanium oxide sensors for sulphur dioxide

Although many sensor materials show resistance response to the presence of sulphur dioxide, the problem with measurement of this gas using this technology is that the sensors often rapidly become poisoned. Sometimes this is due to the formation of metal sulphates which are molten at the operating temperature. Sometimes it is because of an irreversible adsorption of the gas.

It is not obvious how to choose a material which gives a satisfactory response to SO₂, which is small in comparison with the effects of change in relative humidity, and which also is not poisoned by the presence of the gas and shows a reversible response. Table 2 shows that a sensor made from Cr_{1.8}Ti_{0.2}O₃ shows a satisfactory response in comparison with the effects of changes in relative humidity. We have further found that such sensors are stable in the presence of the gas, even at high concentration (e.g. 2000ppm), and do not age or become poisoned. Other sensors of the general formula Cr₍₂₋ₓ₎TiₓO₃, where 0.3≥x≥0.1, are by and large equally effective.

**Table 2**

| **Sensor response to sulphur dioxide compared with response to change in relative humidity** | |
|---|---|
| Composition: | Cr_{1.8}Ti_{0.2}O₃ |
| Operating temperature: | 500°C |
| Resistance in dry air: | 10kohm |
| Resistance in wet air (100%RH at 20°C): | 12 kohm |
| Resistance in dry air containing 400ppm SO₂: | 15 kohm |

### Sensors, and combinations of sensors, for various volatile organic compounds

### (a) Chromium titanium oxide sensors

Table 3, below, shows the response of sensors fabricated from Cr_{1.8}Ti_{0.2}O₃ to a range of organic vapours, compared with the effect of a change in relative humidity from 0 to 100%. The effects of the organic vapours are large in comparison with the effects of water vapour, and in some cases are very large. The previous disclosures that are concerned with compositions including those in the range Cr₍₂₋ₓ₎TiₓO₃ implied that these compositions were insensitive to such vapours. The result exemplified in Table 3 is therefore surprising. We ascribe this result to differences in the detail of the preparation: in particular, we have found that a microstructure comprising very small crystallites (<1µm average diameter) with a very fine scale porosity (average pore diameter <1µm) is necessary to confer such strong sensitivity.

**Table 3**

| **Response of sensors fabricated from Cr**_{**1.8**}**Ti**_{**0.2**}**O**_{**3**} **to a range of organic vapours, compared with the effect of a change in relative humidity from 0 to 100%** | | | |
|---|---|---|---|
| gas | concentration /ppm | operating temperature/°C | Resistance ratio: R_{gas}/Rₐᵢᵣ |
| water vapour | 100%RH at 20°C | 400 | 1.2 (compared with dry air) |
| propane | 1000 | 475 | 1.4 |
| butane | 1000 | 475 | 1.4 |
| hexane | 3000 | 475 | 2.7 |
| hexane | 3000 | 400 | 3.1 |
| petroleum (gasolene) | vapour above liquid at 20°C | 475 | 5.6 |
| methanol | 1000 | 460 | 3.1 |
| methanol | 1000 | 250 | >3.5 |
| ethanol | 1000 | 460 | 2.8 |
| ethanol | 1000 | 250 | >3.1 |
| propan-2-ol | 200 | 400 | 8.4 |
| acetone | vapour above liquid at 20°C | 500 | 9 |
| butan-2-one | vapour above liquid at 20°C | 475 | 6.3 |
| glutaraldehyde | 1 | 400 | 1.2 |
| glutaraldehyde | 3 | 400 | 1.5 |
| dimethoxyethane | 5000 | 500 | 5.7 |

### (b) Chromium iron niobate sensors used in a sensor array with Cr₍₂₋ₓ₎TiₓO₃

Table 4, below (and see also Figure 8), shows the response of sensors fabricated from CrNbO₄ and Fe_{(1-y)}Cr_{y}NbO₄, where 1≥y≥0, a variety of organic vapours. The pattern of responses is different from that of Cr₍₂₋ₓ₎TiₓO₃, and furthermore is also different from that shown by sensors made from SnO₂, or SnO₂ doped with precious metals (Pt. Pd etc.), such as are common in the art. Therefore, combinations of such sensors can usefully be deployed in a sensor array, e.g. a so-called 'electronic nose', to discriminate between different vapours, using pattern-recognition methods, or principal component analysis, or standard methods of multivariate regression. The use of sensor materials such as those described here will confer advantage because such materials have such different patterns of response. Furthermore, the materials are much less sensitive to the effects of variable relative humidity, and are much more stable than those previously described: these attributes are particularly important in a sensor array system.

Figure 8 shows that a sensor made of CrNbO₄ is particularly suitable for detection of CO.

**Table 4**

| **Response of chromium iron niobaten to various Organic gases/vapours, compared with the effect of a change in relative humidity between zero and 100%** | | | | |
|---|---|---|---|---|
| sensor material | gas | concentration /ppm | operating temperature/°C | resistance Rgas/Rair |
| CrNbO₄ | water vapour | 100%RH at 20°C | 500 | 1.15 (compared with dry air) |
| CrNbO₄ | acetone | vapour over liquid at 20°C | 500 | 13.8 |
| CrNbO₄ | dimethoxyethane | 5000 | 500 | 4.0 |
| CrNbO₄ | hexane | 3000 | 500 | 2.3 |
| CrNbO₄ | petroleum | vapour over liquid at 20°C | 500 | 9.0 |
| * | methylmethacrylate | 20 | 500 | 0.73 |
| * | methylmethacrlate | 80 | 500 | 0.58 |
| CrNbO₄ | CO (see Fig. 12) | 400 | 400 | 1.94 (compared with dry air) |

| | | | | |
|---|---|---|---|---|
| * Fe_{0.92}Cr_{0.08}NbO₄ | | | | |

### Barium antimony stannate sensors used in a sensor array with Cr₍₂₋ₓ₎TiₓO₃

Surprisingly, we have now found that BaSnO₃ exhibits a useful sensitivity to the presence of small concentrations of carbon dioxide in the air. We have further found that, although the presence of CuO serves to increase the speed of response somewhat, the main effect of CuO is to lower the electrical resistance of the composite into a range where measurements are more easily made. Even more surprisingly, and in direct contradiction to the presumptions a rising from the earlier work cited above, we have found that the electrical resistivity of BaSnO₃ can be satisfactorily lowered by replacing a fraction of the Sn in the formula by a pentavalent element, particularly Sb,, and that sensors prepared from the resulting material show an electrical resistance varying by a useful amount in response to the presence of small additional concentrations of carbon dioxide in the air.

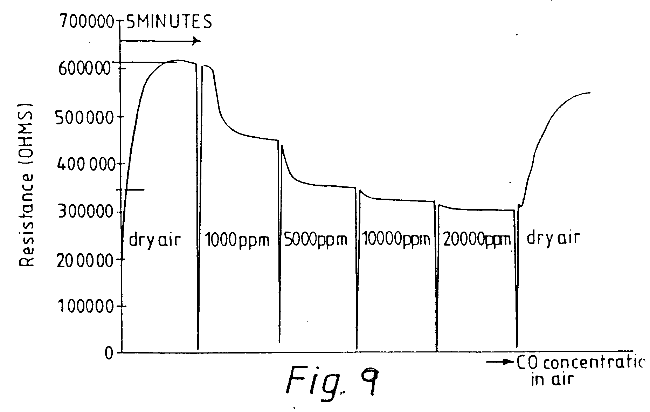

In an example, a material of composition BaSn_{0.99}Sb_{0.01}O₃ was prepared by conventional ceramic fabrication techniques, mixing powders of BaCO₃, SnO₂ and Sb₂O₅ in the appropriate proportions and firing in a furnace at 800°C. A sensor was prepared on a self-heated, planar substrate, as above, using conventional screen-printing fabrication methods. Figure 9 shows the variation in electrical resistance of this sensor element in response to changes in the concentration of carbon dioxide in the air, being plotted over successive 5-minute periods, all at 350°C.

BaSnO₃ also, as disclosed in the document GB-A-2 149 121, shows resistance changes in response to the presence of small concentrations of reactive and flammable gases in the atmosphere. In order to distinguish such changes from those caused by variations in the concentration of carbon dioxide, a sensor comprising BaSn_{(1-z)}Sb_{z}O₃(O<z≤0.1) as the sensitive element can be combined with another sensor which responds to the presence of reactive gases, but which does not respond to the presence of small concentrations of CO₂, i.e. Cr₍₂₋ₓ₎TiₓO₃ having the advantage of a relatively low response to the effect of changes in relative humidity, an discussed above. The interfering effect of changes in relative humidity on the sensor of composition BaSn_{(1-z)}Sb_{z}O₃ can be mitigated by using it in conjunction with a humidity sensor of conventional design, e.g. a capacitive device utilising aluminium oxide as the sensitive element.

### Combinations of sensors useful for the monitoring of leaks of ammonia and chlorofluorocarbon refrigerants

Tin dioxide is useful as a sensing element material in a gas-sensitive resistor responding to the presence of small concentrations in the air of chlorofluorocarbons (CFC) such as CF₂Cl₂ (also known as R22). These agents are widely used as refrigerants but they have severe effects on the concentration of ozone in the upper atmosphere, so any leakage must be reliably and immediately detected. However, tin dioxide as a sensing element material suffers from the disadvantage of a strong effect of variations in relative humidity and also a strong response to many other reactive gases which might be present in the atmosphere, such as carbon monoxide emitted from internal combustion engines, or solvent vapours from cleaning agents, packaging and glue.

In particular, also, SnO₂ shows a strong response to ammonia, which is also widely used as a refrigerant, and which may be used in conjunction with chlorofluorocarbons such as R22. In such cases, it is important to be able to distinguish a leakage of CFC from a leakage of ammonia. Sensors prepared with Cr₍₂₋ₓ₎TiₓO₃ as the gas-sensitive resistor element have, as noted above, a response to organic vapours, including carbon monoxide, and, as previously disclosed in GB-A-2 202 940, ammonia. However, they are relatively insensitive to variations of relative humidity (as disclosed above); importantly, they are also insensitive to the presence of a CFC (R22).

Therefore, a pair of sensors, one of which, utilises SnO₂ and the other Cr₍₂₋ₓ₎TiₓO₃, will be able to distinguish a leak of CFC (signal only on SnO₂) from one of ammonia (signal on both sensors), or a leak of CFC (signal only on SnO₂), from the presence of solvent vapours or carbon monoxide (signal on both sensors).

A combination of these two sensors with a humidity sensor of conventional design, e.g. a capacitive device utilising aluminium oxide as the sensitive element, will be able to discriminate all interferences. The humidity sensor, being unaffected by the refrigerant gases or by solvent vapours at environmentally significant concentrations, then provides a signal to compensate for the effect of relative humidity changes on the tin dioxide element, whilst the Cr₍₂₋ₓ₎TixO₃ provides a signal to compensate for the presence of solvent vapours.

Discrimination between the effects of ammonia and the effects of solvent vapours, and consequent avoidance of false alarms, can also be obtained by using a combination of a sensor fabricated from Cr₍₂₋ₓ₎TiₓO₃ with one fabricated from Fe_{(1-y)}Cr_{y}NbO₄(0≤y≤1). For example, Table 5, below, shows a comparison of the response of these different materials to ammonia.

Comparison of the results in Table 5 with those in Tables 3 and 4 shows that CrNbO₄ is much less sensitive to ammonia than Cr_{1.8}Ti_{0.2}O₃, but that it is equally, or more sensitive to solvent vapours. A simple comparison of the signal from two such sensors would then give a false alarm due to the presence of solvent vapour.

However, in a sensor array comprising such a combination of sensors, if the signal from the Cr_{1.8}Ti_{0.2}O₃ sensor is greater than that from the CrNbO₄ sensor, then ammonia is present: if it is less, then solvent vapours are present. Tables 4 and 5 show that similar combinations of Cr_{1.8}Ti_{0.2}O₃ with Fe_{(1-y)}Cr_{y}NbO₄(0≤y≤1) can be devised. Furthermore, a combination of these two sensors with a sensor fabricated from SnO₂ would, as described above, allow discrimination of solvent vapours, ammonia and CFC such as R22.

**Table 5**

| **Comparison of response to 100ppm ammonia in air, of sensors fabricated from various materials** | | |
|---|---|---|
| Sensor material | Operating temperature /°C. | Resistance in 100ppm NH₃ in dry air/ Resistance in dry air |
| Cr_{1.8}Ti_{0.2}O₃ | 430 | 1.77 |
| CrNbO₄ | 500 | 1.27 |
| Fe_{0.92}Cr_{0.08}NbO₄ | 500 | 0.53 |

### Sensor configurations with reference to the electrical interrogation of the gas sensitive materials

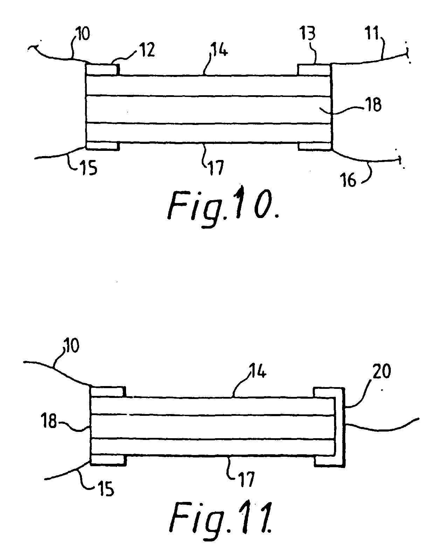

Figure 10 shows, purely diagrammatically, the conventional configuration of a semiconductor gas sensor, whereby the latter has four wires for electrical connection. Two of these, 10 and 11, are attached to a pair of electrodes 12 and 13, which are bridged by the gas sensing element 14, the resistance of which is to be measured. The other two wires 15 and 16 supply a resistance heating element 17, which is typically electrically insulated from the sensing element 14, for example by a layer of alumina 18 with the heating element 17 on one side and the sensing element 14 on the other.

When sensor element materials are used that have a resistance within a suitable range of values, however, it is possible to use fewer wires, with the advantage that heat loss by conduction is reduced. The sensor can then achieve its operating temperature with reduced power input.

For example, when the resistance of the sensing material during operation remains high with respect to the resistance of the heating element, then it is possible for the sensing part and heating part to have one wire 20 in common, thus reducing the number of wires to three as seen in Figure 11.

Again, when the resistance of the sensing element material at the operating temperature is of similar magnitude to that of the heating element, it is possible to have the sensing element in contact with the heater, as a parallel resistor, i.e. omitting the layer 18. Gas sensing will then be achieved by measuring the combined resistance, through two wires only.

These alternative interrogation configurations can be applied, with advantage, to any sensor made with the materials disclosed herein.

## Claims

1. The use of a gas sensor comprising a sensor element of Cr₍₂₋ₓ₎TiₓO₃, where 0.3≥x≥0.1, for the detection of hydrocarbons other than methane; alcohols; aldehydes; ketones; ethers; H₂S; SO₂; or CO.

2. The use according to claim 1 in which the sensing element has a microstructure in which the average crystallite diameter and average pore diameter are both smaller than 1 micrometre.

3. The use according to claim 1 or 2 wherein the sensor includes a heating element (17) for heating the sensing element (14), and electrical connecting means connected variously to the sensing element and heating element; said connecting means comprising first connection means (10,15) connected to the sensing element, and a common electrical connection (20) connected to both of said elements (14,17).

4. The use according to claim 3 wherein one of the said elements (14,17) is overlaid on the other so that they work as two resistors in parallel, the said first connection means comprising a further connection common to both of said elements (14,17).

5. The use according to any preceding claim in a sensor array, the Cr₍₂₋ₓ₎TiₓO₃ sensor forming a first sensor in the array and being in combination with at least one further sensor having a characteristic response different from that of said first sensor.

6. The use of a sensor array according to claim 5, wherein said further sensor has a sensing element material of Fe_{(1-y)}Cr_{y}NbO₄, where 1≥y≥0 for distinguishing between ammonia, and organic vapour.

7. The use of a sensor array according to claim 6, wherein said further sensor is of CrNbO₄.

8. The use of a sensor array according to claim 5 wherein said further sensor or another said further sensor has a sensing element of SnO₂

9. The use of a sensor array according to claim 5 wherein said further sensor has a sensor element of BaSn_{(1-z)}Sb_{z}O₃, where O≤z≤0.1, the first sensor being a sensor responsive to reactive and/or flammable gases but substantially non-responsive to CO₂ at low concentrations to which said further sensor shows a significant response.

10. The use of a sensor array according to any one of claims 5 to 9, wherein the array further includes a humidity sensor arranged for mitigating effects of relative humidity.

11. The use of a gas sensor comprising a sensor element of Cr₍₂₋ₓ₎TiₓO₃, where x = 0.05, for the detection of CO.

## Patentansprüche

1. Verwendung eines Gassensors, umfassend ein Sensorelement aus Cr₍₂₋ₓ₎ TiₓO₃, wobei 0,3 ≥ x ≥ 0,1 ist, zum Nachweis von von Methan verschiedenen Kohlenwasserstoffen, Alkoholen, Aldehyden, Ketonen, Estern, H₂S, SO₂ oder CO.

2. Verwendung nach Anspruch 1, wobei das nachweisende Element eine Mikrostruktur aufweist, in welcher der durchschnittliche Kristallitdurchmesser und der durchschnittliche Porendurchmesser beide kleiner als 1 Mikrometer sind.

3. Verwendung nach Anspruch 1 oder 2, wobei der Sensor ein Heizelement (17) zum Erwärmen des nachweisenden Elements (14) und Mittel zum elektrischen Anschließen, welche jeweils an das nachweisenden Element und das Heizelement angeschlossen sind, einschließt, wobei die anschließenden Mittel erste anschließende Mittel (10, 15), welche an das nachweisende Element angeschlossen sind, und einen allgemeinen elektrischen Anschluss (20), welcher mit beiden dieser Elemente (14, 17) verbunden ist, umfasst.

4. Verwendung nach Anspruch 3, wobei eines der Elemente (14, 17) auf das andere überlagert ist, so dass sie parallel als zwei Resistoren arbeiten, wobei die ersten Anschlussmittel einen weiteren Anschluss, welcher beiden Elementen (14, 17) gemeinsam ist, umfassen.

5. Verwendung nach einem der vorangehenden Ansprüche in einer Sensor-matrix, wobei der Cr₍₂₋ₓ₎TiₓO₃-Sensor einen ersten Sensor in der Matrix bildet und in Kombination mit mindestens einem weiteren Sensor, welcher eine charakteristische Antwort, welche von der des ersten Sensors verschieden ist, aufweist, vorliegt.

6. Verwendung einer Sensormatrix nach Anspruch 5, wobei der weitere Sensor ein nachweisendes Element Material aus Fe_{(1-y)}Cr_{y}NbO₄ aufweist, wobei 1 ≥ y ≥ 0 ist, zum Unterscheiden zwischen Ammoniak und organischem Dampf.

7. Verwendung einer Sensormatrix nach Anspruch 6, wobei der weitere Sensor aus CrNbO₄ ist.

8. Verwendung einer Sensormatrix nach Anspruch 5, wobei der weitere Sensor oder ein anderer weiterer solcher Sensor ein nachweisendes Element aus SnO₂ aufweist.

9. Verwendung einer Sensormatrix nach Anspruch 5, wobei der weitere Sensor ein Sensorelement aus BaSn_{(1-z)}Sb_{z}O₃, wobei 0 ≤ z ≤ 0,1, ist, wobei der erste Sensor ein Sensor für reaktive und/oder brennbare Gase ist, aber im wesentlichen nicht auf CO₂ in niedrigen Konzentrationen anspricht, auf welches der weitere Sensor eine deutliche Antwort zeigt.

10. Verwendung einer Sensormatrix nach einem der Ansprüche 5 bis 9, wobei die Matrix ferner einen Feuchtigkeitssensor einschließt, welcher zur Milderung von Wirkungen von relativer Feuchtigkeit angeordnet ist.

11. Verwendung eines Gassensors, welcher ein Sensorelement aus Cr₍₂₋ₓ₎TiₓO₃ umfasst, wobei x = 0,05, zum Nachweis von CO.

## Revendications

1. Utilisation d'un capteur de gaz comprenant un élément capteur en Cr₍₂₋ₓ₎TiₓO₃ où 0,3 ≥ x ≥ 0,1, pour la détection d'hydrocarbures autres que le méthane; des alcools; des aldéhydes; des cétones; des éthers; H₂S; SO₂; ou CO.

2. Utilisation selon la revendication 1 dans laquelle l'élément capteur a une microstructure où le diamètre de cristallite moyen et le diamètre de pore moyen sont tous deux inférieurs à 1 micromètre.

3. Utilisation selon la revendication 1 ou 2, dans laquelle le capteur comprend un élément chauffant (17) pour le chauffage de l'élément capteur (14), et des moyens de connexion électrique reliés diversement à l'élément capteur et à l'élément chauffant; lesdits moyens de connexion comprenant des premiers moyens de connexion (10, 15) reliés à l'élément capteur, et une connexion électrique commune (20) reliés aux deux desdits éléments (14, 17).

4. Utilisation selon la revendication 3, dans laquelle un desdits éléments (14, 17) est superposé sur l'autre de manière qu'ils travaillent comme deux résistances en parallèle, ledit premier moyen de connexion comprenant une connexion supplémentaire commune aux deux desdits éléments (14, 17).

5. Utilisation selon l'une quelconque des revendications précédentes dans une batterie de capteurs, le capteur en Cr₍₂₋ₓ₎TiₓO₃ formant un premier capteur dans la batterie et étant en combinaison avec au moins un capteur supplémentaire ayant une réponse caractéristique différente de celle dudit premier capteur.

6. Utilisation d'une batterie de capteurs selon la revendication 5, dans laquelle ledit capteur supplémentaire a un matériau d'élément capteur en Fe_{(1-y)}Cr_{y}NbO₄, où 1 ≥ y ≥ 0, pour la distinction entre l'ammoniac et une vapeur organique.

7. Utilisation d'une batterie de capteurs selon la revendication 6, dans laquelle ledit capteur supplémentaire est en CrNbO₄.

8. Utilisation d'une batterie de capteurs selon la revendication 5, dans laquelle ledit capteur supplémentaire ou un autre dudit capteur supplémentaire a un élément capteur en SnO₂.

9. Utilisation d'une batterie de capteurs selon la revendication 5, dans laquelle ledit capteur supplémentaire a un élément capteur en BaSn_{(1-z)}Sb_{z}O₃ où 0 ≤ z ≤ 0,1, le premier capteur étant un capteur sensible à des gaz réactifs et/ou inflammables mais essentiellement non sensible à CO₂ aux faibles concentrations auxquelles ledit capteur supplémentaire présente une réponse significative.

10. Utilisation d'une batterie de capteurs selon l'une quelconque des revendications 5 à 9, dans laquelle la batterie comprend en outre un capteur d'humidité arrangé pour modérer des effets de l'humidité relative.

11. Utilisation d'un captent de gaz comprenant un élément captent en Cr₍₂₋ₓ₎TiₓO₃, où x = 0,05, pour la sélection de CO.
